# EUROPEAN PATENT SPECIFICATION

(11) **EP 4 579 044 B1**
(45) Date of publication and mention of the grant of the patent: **08.07.2026**
(21) Application number: 24221031.8
(22) Date of filing: 18.12.2024
(51) Int. Cl.: E02F 9/20, E02F 9/24, E02F 9/26, G06V 20/58, G08B 21/02

(54) **SURROUNDING MONITORING DEVICE FOR WORK MACHINE, AND WORK MACHINE**
UMGEBUNGSÜBERWACHUNGSVORRICHTUNG FÜR EINE ARBEITSMASCHINE UND ARBEITSMASCHINE
DISPOSITIF DE SURVEILLANCE DES ALENTOURS D'UNE MACHINE DE TRAVAIL, ET MACHINE DE TRAVAIL

(30) Priority: 28.12.2023 JP 2023222843
(43) Date of publication of application: 02.07.2025
(73) Proprietor: Sumitomo Heavy Industries, Ltd., Tokyo 141-6025 (JP)
(72) Inventor: AIZAWA, Susumu, Kanagawa, 237-8555 (JP)
(74) Representative: Louis Pöhlau Lohrentz

(56) References cited:
- EP-A1- 3 868 963
- WO-A1-2014/123228
- JP-A- 2020 183 623
- JP-B2- 5 227 841
- US-A1- 2022 333 357
- US-B2- 11 047 113

## Description

### BACKGROUND

### 1. Technical Field

The present disclosure relates to a surrounding monitoring device for a work machine, and a work machine.

### 2. Description of Related Art

When a work machine is driven in accordance with an operator's operation, a region that can be seen by the operator is often limited. Therefore, various surrounding monitoring devices have been proposed to recognize objects existing in a region that cannot be seen by the operator (see, for example, International Publication No. WO2014/123228).

JP 2020 183623A discloses a shovel.

Even if an operator recognizes an object existing around a work machine, whether or not the recognized object could contact the work machine would be determined considering the shape of the work machine. Thus, it may be demanding for the operator to understand a positional relationship between the work machine and the object existing around the work machine.

One aspect of the present disclosure changes a display mode of a part of a work machine, the part being close to an object existing around the work machine, thereby facilitating recognition of a positional relationship between the part and the object.

### SUMMARY

The invention is set out in the appended set of claims.

### BRIEF DESCRIPTION OF THE DRAWINGS

FIG. 1 is a side view illustrating an example of a crawler crane according to an embodiment of the present disclosure;
FIG. 2 is a top view illustrating an example of the crawler crane according to the embodiment;
FIG. 3 is an explanatory diagram illustrating a measurement range in a height direction (Z-axis direction) of distance measurement devices according to the embodiment;
FIG. 4 is a block diagram illustrating an example of a configuration of a surrounding monitoring device according to the embodiment;
FIG. 5 is a diagram illustrating an example of a monitor screen displayed by a display controller according to the embodiment;
FIG. 6 is a diagram illustrating an example of the monitor screen displayed by the display controller according to the embodiment;
FIG. 7 is a flowchart illustrating a processing procedure performed by a controller according to the embodiment when assembling the crawler crane;
FIG. 8 is a flowchart illustrating a processing procedure through which the controller according to the embodiment displays a monitor screen;
FIG. 9 is a diagram illustrating an example of a monitor screen that is displayed, for invoking an operator's attention, by the display controller according to the embodiment; and
FIG. 10 is a diagram illustrating an example of the monitor screen that is displayed, for invoking the operator's attention, by the display controller according to the embodiment.

### DETAILED DESCRIPTION

Hereinafter, embodiments of the present invention will be described with reference to the drawings. The embodiments as described below do not limit the present invention but are illustrative. All of the features described in the embodiments and combinations of the features are not necessarily essential to the present invention. Throughout the drawings, the same or corresponding components are denoted by the same or corresponding symbols, and description thereof may be omitted.

The following embodiments of the present disclosure will be described using an example in which a crawler crane is used as an example of a work machine. However, the following embodiments of the present disclosure do not limit the work machine to a crawler crane.

### (Embodiment)

Hereinafter, an embodiment of the present disclosure will be described with reference to the drawings.

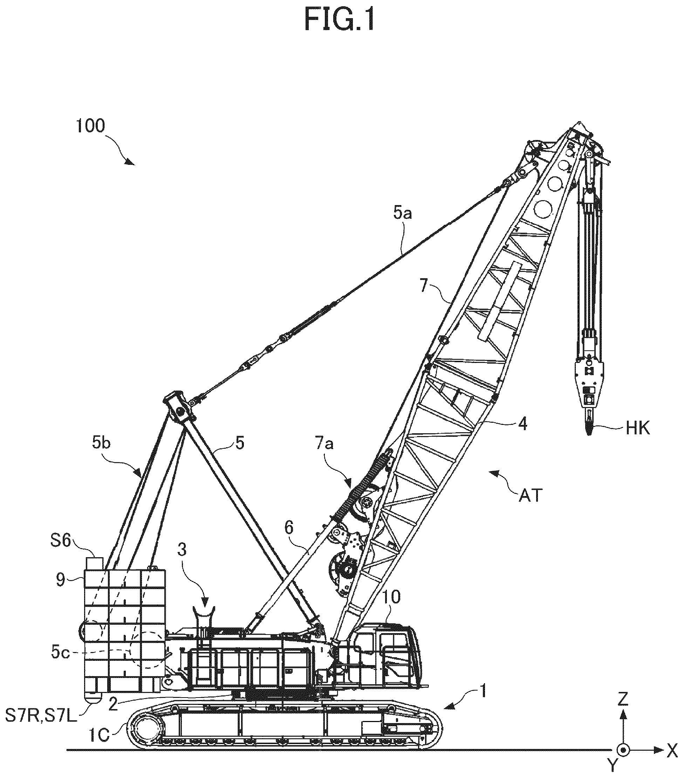

First, an outline of a crawler crane 100 will be described with reference to FIGS. 1 to 2.

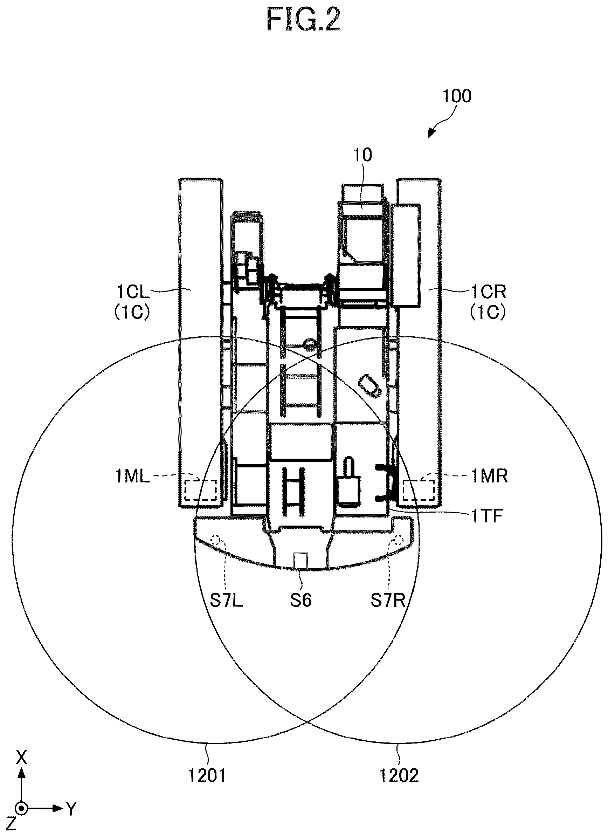

FIG. 1 is a side view illustrating an example of the crawler crane 100 according to the present embodiment, and FIG. 2 is a top view illustrating an example of the crawler crane 100 according to the present embodiment. In the present embodiment described below, one end side at which hydraulic motors for traveling (i.e., driving wheels) of crawlers 1C are provided is referred to as "rear" (negative X-axis direction side) of a lower traveling body 1, and the opposite side is referred to as "front" (positive X-axis direction side) of the lower traveling body 1. FIG. 2 omits illustration of a boom 4, a mast 5, a backstop 6, and the like, which are illustrated in FIG. 1.

A crawler crane 100 includes: the lower traveling body 1; an upper slewing body 3 that is slewably mounted on the lower traveling body 1 via a slewing mechanism 2; an attachment AT; a mast 5; a backstop 6; a hook HK; a counterweight 9; and a cab 10.

The lower traveling body 1 includes: a track frame 1TF configured to support the upper traveling body 3; and a pair of left and right crawlers 1C (left crawler 1CL and right crawler 1CR) attached to the track frame 1TF rightward and leftward of the track frame 1TF. The lower traveling body 1 causes the crawler crane 100 to travel when the left crawler 1CL is hydraulically driven by a left hydraulic motor 1ML for traveling and the right crawler 1CR is hydraulically driven by a right hydraulic motor 1MR for traveling.

The upper slewing body 3 slews with respect to the lower traveling body 1 when the slewing mechanism 2 is hydraulically driven.

The attachment AT (an example of a work device) includes the boom 4 and a main winding rope 7.

The boom 4 is attached to a front center portion of the upper slewing body 3 so as to be able to derrick. The main winding rope 7 hangs from a tip end of the boom 4, and the hook HK is attached to the tip end of the main winding rope 7. That is, the hook HK is attached to the tip end of the boom 4 via the main winding rope 7.

A base end of the main winding rope 7 is attached to a main winding winch 7a, which is attached to a rear surface portion between a base end of the boom 4 and the tip end of the boom 4, and the tip end of the main winding rope 7 is attached to the hook HK. The main winding rope 7 is configured to move the hook HK up and down through winding and unwinding performed by the main winding winch 7a that is hydraulically driven.

The mast 5 is attached to the upper slewing body 3 slightly rearward of the base end of the boom 4 so as to be rotatable about a rotation axis parallel to a rotation axis of the boom 4. A tip end of the mast 5 is connected to the tip end of the boom 4 via a pendant rope 5a. The boom 4 derricks via the mast 5 through winding and unwinding of a boom derricking rope 5b performed by a boom derricking winch 5c that is hydraulically driven.

The backstop 6 is attached to the upper slewing body 3, at a portion where a base end of the backstop 6 is rearward of the base end of the boom 4, so as to be rotatable about a rotation axis parallel to the rotation axis of the boom 4. The tip end of the backstop 6 is attached to a rear surface portion between the base end of the boom 4 and the tip end of the boom 4 so as to be rotatable about a rotation axis parallel to the rotation axis of the boom 4. The backstop 6 extends and contracts in accordance with a derricking motion of the boom 4, and has the function of supporting the boom 4 from the rear, for example, when the boom 4 is in a substantially upright state.

The hook HK is attached to the tip end of the main winding rope 7, and is used for suspending a suspended load.

The counterweight 9 is provided at a rear end of the upper slewing body 3, and has the function of balancing the weight of the boom 4 and the weight of the suspended load.

The cab 10 is attached, for example, to a front right end of the upper slewing body 3. The interior of the cab 10 includes an operator's seat and operating devices configured to operate various actuators.

The present embodiment will be described using an example in which a photographing device S6 and distance measurement devices S7 are provided as a plurality of space recognition devices configured to obtain a surrounding state of the crawler crane 100.

The photographing device S6 is, for example, attached to an upper rear end of the counterweight 9, and is configured to photograph a space rearward of the crawler crane 100. The photographing device S6 is, for example, a monocular wide-angle camera having a very wide angle of view. Also, the photographing device S6 may be a stereo camera, a distance imaging camera, or the like. An image obtained by the photographing device S6 is taken into a controller 30.

The photographing device S6 according to the present embodiment may be provided at a position where the surroundings of the crawler crane 100 can be monitored. The position of the photographing device S6 is not limited to the upper rear end of the counterweight 9. The photographing device S6 may be provided, for example, at an upper left side, an upper right side, or an upper front portion of the counterweight 9.

The distance measurement devices S7 are provided around the counterweight 9, and may be a device configured to detect the distance to an object existing around the crawler crane 100. The distance measurement devices S7 are, for example, a light detection and ranging (LiDAR) sensor.

For example, the distance measurement devices S7 emit infrared rays in a predetermined direction and receive reflected light from an object in the predetermined direction, thereby obtaining information of an object around the crawler crane 100, specifically, information of received reflected light (hereinafter referred to as "received light information"). The distance measurement devices S7 are, for example, a scanning LiDAR sensor, and are a three-dimensional laser scanner configured to perform scanning vertically and horizontally in the emission direction of infrared laser beams. Also, the distance measurement devices S7 may be what is referred to as a flash-type LiDAR sensor configured to emit infrared rays from a light-emitting module over a three-dimensional wide range, and obtain an image from reflected light (infrared rays) with a three-dimensional distance imaging element. The distance measurement devices S7 are not limited to a LiDAR sensor, and may be a stereo camera, a millimeter wave radar, an ultrasonic sensor, a laser radar, or the like.

The distance measurement devices S7, i.e., a distance measurement device S7L and a distance measurement device S7R, are mounted on the left side of the lower rear end of the counterweight 9 and the right side of the lower rear end of the counterweight 9, respectively. The distance measurement device S7L is configured to detect an object rearward and leftward of the crawler crane 100. The distance measurement device S7R is configured to detect an object rearward and rightward of the crawler crane 100.

A measurement range 1201 in FIG. 2 indicates a range in which the distance measurement device S7L can detect an object. A measurement range 1202 in FIG. 2 indicates a range in which the distance measurement device S7R can detect an object.

Therefore, the controller 30 according to the present embodiment can detect an object existing around the counterweight 9 in accordance with measurement results obtained from the distance measurement devices S7.

The present embodiment merely illustrates an example of an arrangement of the distance measurement devices S7, and does not limit the arrangement of the distance measurement devices S7 to the arrangement illustrated in FIG. 2. The positions of the distance measurement devices S7 may be any positions at which the distance measurement devices S7 can detect an object around the crawler crane 100. For example, the distance measurement devices S7 may be provided on the upper surface of the counterweight 9 or near the front side of the upper slewing body 3 of the crawler crane 100, in order to detect an object existing frontward of the crawler crane 100.

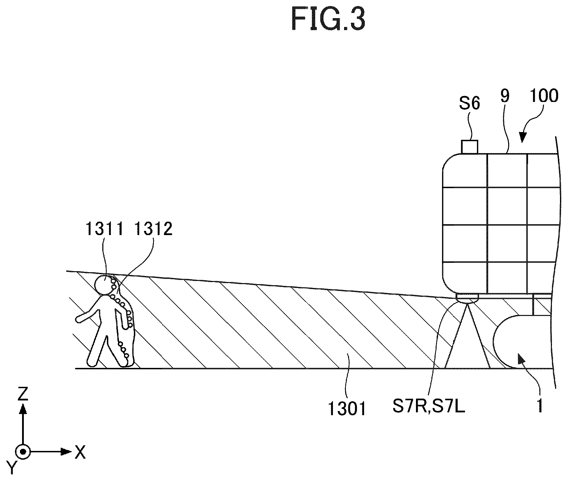

FIG. 3 is an explanatory diagram illustrating a measurement range in a height direction (Z-axis direction) of the distance measurement devices S7 according to the present embodiment. FIG. 3 illustrates a measurement range 1301 of the distance measurement devices S7 provided at the lower rear end of the counterweight 9. The measurement range 1301 is a range in which the distance measurement devices S7 can detect an object (e.g., a human 1311) existing around the crawler crane 100.

Specifically, in the measurement range 1301, the distance measurement devices S7 detect a point cloud 1312 indicating each position at which infrared rays are reflected, as a surface shape of the object (e.g., the human 1311).

The distance measurement devices S7 detect a measurement range rearward and laterally of the counterweight 9, e.g., a measurement range of from the left rear to the right rear in a horizontal direction (i.e., a circumferential direction as viewed from the crawler crane 100).

Also, each of the distance measurement devices S7 of the crawler crane 100 is mounted in the counterweight 9 such that the optical axis faces obliquely downward, and detects the measurement range 1301 in the vertical direction, including a space from the ground near the crawler crane 100 to a position that is far from the crawler crane 100. In this manner, the distance measurement devices S7L and S7R are configured to emit infrared rays to the above-described measurement range.

The distance measurement devices S7L and S7R cannot detect spaces directly below themselves (in the negative Z-axis direction). However, the distance measurement device S7L includes a space directly below the distance measurement device S7R in the measurement range, and the distance measurement device S7R includes a space directly below the distance measurement device S7L in the measurement range. This prevents formation of blind spots in the measurement ranges.

The present embodiment does not intend any limitation to a method of providing the distance measurement devices S7 at the lower rear end of the counterweight 9. For example, there is also a crawler crane having a configuration in which a counterweight is mounted on a base frame rather than the configuration as illustrated in FIG. 3 in which the counterweight 9 extends to the lowest position, in other words, the counterweight 9 is carried. In this case, the distance measurement devices may be provided at the lower rear end of the base frame.

The crawler crane 100 is to be assembled in accordance with the work site. Individually for each work site, the crawler crane 100 includes, for example, different numbers of stages of the boom 4 (the length of the boom 4) or different numbers of weights stacked on the counterweight 9. Therefore, the shape of the crawler crane 100 changes for each work site.

That is, an operator needs to consider the shape of the crawler crane 100, which changes for each work site, and operate the crawler crane so as not to contact surrounding objects.

Therefore, the controller 30 according to the present embodiment provides the operator with a correspondence relationship between parts of the crawler crane 100 that change in shape for each work site, and objects existing around the crawler crane 100.

The present embodiment will be described using an example in which the photographing device S6 and the distance measurement devices S7 are included as a space recognition device. However, the present embodiment does not intend any limitation to the example in which the photographing device S6 and the distance measurement devices S7 are provided, and other configurations are possible.

### [Configuration of Surrounding Monitoring Device]

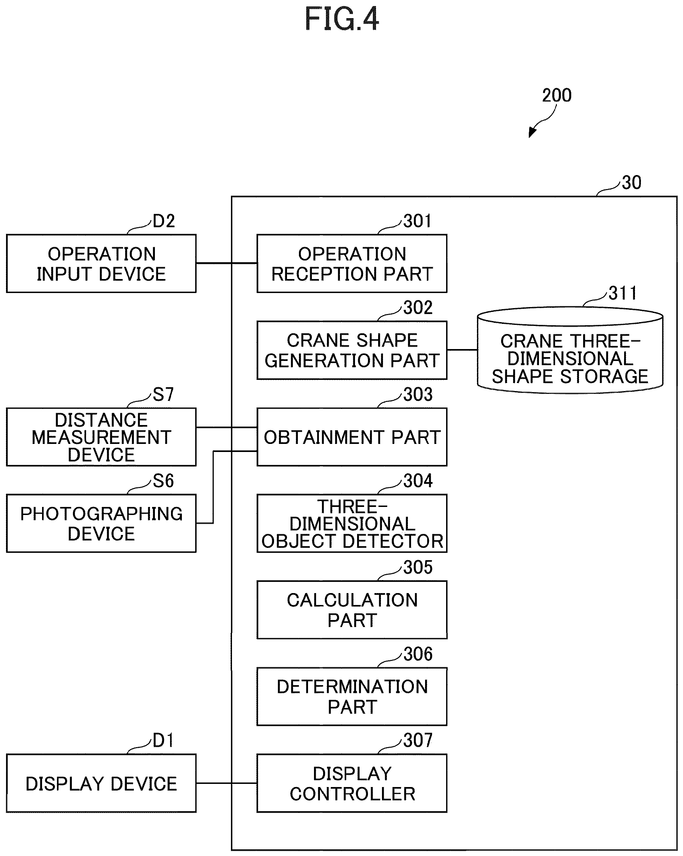

Next, the configuration of a surrounding monitoring device 200 to be mounted on the crawler crane 100 according to the present embodiment will be described with reference to FIG. 4 in addition to FIGS. 1 to 3.

FIG. 4 is a block diagram illustrating an example of the configuration of the surrounding monitoring device 200 according to the present embodiment.

The surrounding monitoring device 200 is configured to monitor whether or not there is an object that can contact the counterweight 9 within the measurement range around the crawler crane 100, and notify, of a monitoring result, an operator in the cab 10, a worker around the crawler crane 100, or the like. Also, when detecting a monitoring target, the surrounding monitoring device 200 may be set so as to restrict a movement of the crawler crane 100 and ensure safety around the crawler crane 100.

Examples of the monitoring target include: a "human", such as a worker who is working around the crawler crane 100, a supervisor of a work site, or the like; a moving object, such as vehicles including a truck, and the like; fixed objects; and the like.

The present embodiment is an example of detecting an object that can contact the counterweight 9 of the crawler crane 100. In other words, the monitoring target does not include an object that is lower in height than the counterweight 9, by regarding such an object as an object that cannot contact the counterweight 9. The present embodiment illustrates an example of a monitoring method, and an object that is lower in height than the counterweight 9 may be included in the monitoring target.

The surrounding monitoring device 200 includes the controller 30, the photographing device S6, the distance measurement device S7, a display device D1, and an operation input device D2.

The display device (an example of the display) D1 is provided around an operator's seat in the cab 10, specifically, at a position at which an operator sitting on the operator's seat readily recognizes the display device D1. The display device D1 is configured to display various image information to be provided to the operator. The display device D1 may be a liquid crystal display, an organic electroluminescence (EL) display, or the like, and may be a touch panel-type display that also serves as the operation input device D2. For example, the display device D1 displays an image expressing the surrounding state of the crawler crane 100 (own machine) in accordance with a photographed image obtained by the photographing device S6 under control of the controller 30.

The operation input device D2 is configured to receive, from an operator, an operation input of various functions of the surrounding monitoring device 200, and output the received operation input to the controller 30. The operation input device D2 includes, for example, a desired hardware operation part, such as a touch panel, a touch pad, a button, a toggle, a rotary knob, or the like. The operation input device D2 may include, for example, a software operation part that is operable via a hardware operation part, such as, for example, a virtual button icon on an operation screen displayed on the display device D1.

The controller 30 is a control device configured to perform control of the functions of the surrounding monitoring device 200. The controller 30 is, for example, mounted in the cab 10.

The functions of the controller 30 may be achieved by desired hardware or a combination of hardware and software. For example, the controller 30 is mainly configured by a microcomputer including a central processing unit (CPU), a memory device (main storage device), such as a random access memory (RAM) or the like, an auxiliary storage device, such as a read only memory (ROM) or the like, an interface device, and the like. For example, the controller 30 includes an operation reception part 301, a crane shape generation part 302, an obtainment part 303, a three-dimensional object detector 304, a calculation part 305, a determination part 306, and a display controller 307, as functional parts that are achieved by executing, by the CPU, one or more programs installed in the auxiliary storage device. Also, the auxiliary storage device includes a crane three-dimensional shape storage 311.

Some or all of the functions of the controller 30 may be achieved by another controller. That is, the functions of the surrounding monitoring device 200 may be achieved by a plurality of controllers in a distributed manner. Also, the controller 30 may perform control of the crawler crane 100 other than the control of the functions of the surrounding monitoring device 200. That is, the controller 30 may be a dedicated control device specialized in the functions of the surrounding monitoring device 200, or may be a general-purpose control device configured to perform control of various functions of the crawler crane 100 including the functions of the surrounding monitoring device 200.

The crane three-dimensional shape storage 311 is provided in the auxiliary storage device, and stores three-dimensional shape data (an example of the shape information) of the crawler crane 100. In accordance with work sites or work contents, the crawler crane 100 includes different numbers of counterweights 9 and different numbers of stages of the boom 4, which are mounted on the crawler crane 100. The crane three-dimensional shape storage 311 according to the present embodiment stores all combinations of the counterweight 9 and the boom 4 that can be assembled as the crawler crane 100. The controller 30 can generate a three-dimensional shape model of the crawler crane 100 in accordance with work sites or work contents by referring to the crane three-dimensional shape storage 311.

The operation reception part 301 is configured to receive, for example, information indicating operation contents from the operation input device D2.

For example, when the crawler crane 100 is assembled, the operation reception part 301 receives, via a touch panel or the like, an input of information of the crawler crane 100 that has been assembled. The input information includes the number of counterweights 9 mounted on the crawler crane 100, the number of stages of the boom 4, and the like.

The crane shape generation part 302 is configured to refer to the crane three-dimensional shape storage 311, generate a three-dimensional shape model of the crawler crane 100 in accordance with the information whose input has been received by the operation reception part 301, and store the generated three-dimensional shape model in the auxiliary storage device.

The present embodiment does not limit, to the above-described method, a method by which the crane shape generation part 302 generates a three-dimensional shape model of the crawler crane 100. For example, the crane shape generation part 302 may obtain a detection result of the shape of the crawler crane 100 by a distance measurement device provided outside the crawler crane 100, and generate a three-dimensional shape model in accordance with the detection result.

The three-dimensional shape model of the crawler crane 100 is data expressing the surface shape of the crawler crane 100 with a point cloud. Further, the three-dimensional shape model of the crawler crane 100 includes information indicating actual dimensions of the crawler crane 100. Therefore, the controller 30 can recognize actual shape and dimensions of the crawler crane 100 by referring to the three-dimensional shape model. Furthermore, the three-dimensional shape model may retain the shape as a surface in order to display the crawler crane 100 as an image. Alternatively, the three-dimensional shape model may retain information of the color of an actual surface of the crawler crane 100.

The obtainment part 303 is configured to obtain detection results from various sensors provided in the crawler crane 100. For example, the obtainment part 303 obtains image information obtained through photographing by the photographing device S6. Further, the obtainment part 303 obtains point cloud measurement data detected by the distance measurement device S7.

The point cloud measurement data is data that expresses, as a point, each of the pulses of infrared rays emitted by the distance measurement device (e.g., LiDAR sensor) S7 and then reflected from surrounding objects or terrain. The point cloud measurement data retains measurement results as a set of points, and includes data for each point, such as a direction in which an object exists, a distance to an object, a reflection intensity of an object, and the like.

The obtainment part 303 according to the present embodiment converts the obtained point cloud measurement data from the direction and distance with a reference being the distance measurement device (e.g., LiDAR sensor) S7, to a direction and distance from the origin of a coordinate system in which the origin is the center of the crawler crane 100. Further, after the conversion of the coordinate system, the obtainment part 303 may combine the point cloud measurement data of the distance measurement device S7L and the point cloud measurement data of the distance measurement device S7R. The coordinate system to which the direction and distance are converted is merely an example, and is not limiting. The coordinate system to which the direction and distance are converted may be the world coordinate system.

The three-dimensional object detector 304 is configured to detect an object (three-dimensional object) existing around the crawler crane 100 in accordance with the point cloud measurement data obtained by the obtainment part 303.

Specifically, the three-dimensional object detector 304 performs pre-processing on the point cloud measurement data obtained by the obtainment part 303, and then detects a road surface from the pre-processed point cloud measurement data. The pre-processing may include, for example, removal of noise or reduction in density.

Then, the three-dimensional object detector 304 detects an object (three-dimensional object) from the point cloud measurement data after removal of the detected road surface. Specifically, the three-dimensional object detector 304 performs clustering for each object on the point cloud after removal of the detected road surface. Thus, the point cloud is classified for each object (three-dimensional object).

The three-dimensional object detector 304 may define the point cloud clustered for each object as a three-dimensional shape model of the object. Alternatively, the three-dimensional object detector 304 may extract representative points from the point cloud, and define a set of representative points as a three-dimensional shape model. Alternatively, the three-dimensional object detector 304 may derive middle points between a plurality of points included in the point cloud, and define a set of middle points as a three-dimensional shape model.

In a specific method, for example, the three-dimensional object detector 304 meshes the clustered point cloud, and generates a three-dimensional shape model meshed for each object. As a method of meshing, for example, a calculation of a convex hull may be used.

The calculation of the convex hull is a calculation for forming the smallest convex polygon including all of the points of the point cloud for each object. A calculation method of the convex hull is a technique, such as gift wrapping, Graham scan, quick hull, or the like, although any desired technique may be used. The three-dimensional object detector 304 calculates the convex hull for each object, thereby generating a convex polygon (an example of the three-dimensional shape model) for each object.

The three-dimensional shape model for each object generated by the above-described technique can derive position information (distance and direction from the origin) in the coordinate system having the origin, which is the center of the crawler crane 100, for each point forming the three-dimensional shape model. Therefore, the three-dimensional shape model of the object can calculate a distance from any point of the coordinate system, for each point forming the three-dimensional shape model.

The calculation part 305 is configured to calculate, for each object, the distance between each of the points of the point cloud included in the three-dimensional shape model of the object and each of the points of the point cloud included in the three-dimensional shape model of the crawler crane 100. Then, the calculation part 305 identifies, for each object, the shortest distance between the object and the crawler crane 100 among the calculated distances. Further, the calculation part 305 extracts, for each object, a point on the object side and a point on the crawler crane 100 side, which are both ends of the shortest distance, as representative points.

In the present embodiment, the object for which the shortest distance is calculated by the calculation part 305 is assumed to have a height that is equal to or more than a predetermined height. The predetermined height is a height that can contact the counterweight 9, and, for example, is defined to be 1.3 meters (m) in the present embodiment. That is, in the present embodiment, the shortest distance with respect to the crawler crane 100 is calculated for an object having a height equal to or more than 1.3 m that can contact the counterweight 9. The present embodiment illustrates merely an example of the monitoring method, and the shortest distance between the object and the counterweight 9 may be calculated regardless of the height of the object.

The determination part 306 is configured to determine, for each object, whether or not the shortest distance calculated for the object is within a first threshold. In the present embodiment, the first threshold is 2.0 m.

The display controller 307 is configured to perform control to display various information on the display device D1. For example, the display controller 307 displays image information obtained through photographing by the photographing device S6, which is provided at the crawler crane 100.

Further, the display controller 307 displays, as a monitor screen, a result of surrounding monitoring, which indicates the position of the object detected by the distance measurement device S7. The display controller 307 according to the present embodiment generates a virtually three-dimensional space for display of the monitor screen. The virtually three-dimensional space is a space that virtually expresses a state around a work site where the crawler crane 100 exists. For example, the center of the crawler crane 100 is set as the origin of the virtually three-dimensional space.

The three-dimensional shape model of the crawler crane 100 is disposed at the origin of the virtually three-dimensional space.

In the virtually three-dimensional space, the three-dimensional shape model expressing the object generated by the three-dimensional object detector 304 is disposed in accordance with the direction and distance of each of the points included in the point cloud measurement data, with a reference being the center of the three-dimensional shape model of the crawler crane 100.

Then, the display controller 307 displays, as a monitor screen, an image expressing the virtually three-dimensional space from a predetermined viewpoint. Therefore, a monitoring result expressing the three-dimensional shape model of the object detected around the crawler crane 100 is displayed on the monitor screen in which the three-dimensional shape model of the crawler crane 100 is the center.

The monitor screen of the present embodiment is described using an example in which an image expressing the three-dimensional shape model from a predetermined viewpoint is displayed as an image expressing the shape of the crawler crane 100. However, the image expressing the shape of the crawler crane 100 is not limited to an image expressing the three-dimensional shape model from a predetermined viewpoint. For example, image information two-dimensionally expressing the crawler crane 100 may be stored in advance, and used when displaying. In the following, the image expressing the shape of the crawler crane 100 is referred to as a crane shape display image.

When displaying the crane shape display image on the monitor screen, the display controller 307 displays a representative point (an example of the first part) extracted as being closer to an object, in a display mode that is different from those in which the other regions (an example of the second part) of the crane shape display image are displayed. In the present embodiment, a round-shaped icon (hereinafter referred to as a circular icon) is displayed at the representative point, but other display modes may be used. In the present embodiment, when the shortest distance to the object is within the first threshold, a circular icon is displayed at the representative point that forms the shortest distance to the object.

Also, when displaying the three-dimensional shape model expressing the detected object, the display controller 307 displays the representative point on the object side (an example of the third part), which is closer to the representative point on the crawler crane 100 side than are other regions of the object, in a display mode that is different from those in which the other regions on the object side (an example of the fourth part) are displayed. In the present embodiment, a circular icon is displayed at the representative point, but other display modes may be used. The present embodiment is an example in which when the shortest distance to the crawler crane 100 is within the first threshold, a circular icon is displayed at the representative point that forms the shortest distance to the crawler crane 100.

That is, the present embodiment is an example in which the representative point that forms the shortest distance between the crawler crane 100 and an object among the objects existing around the crawler crane 100 is displayed by a circular icon as an object having a high possibility of contacting the counterweight 9, and then is recognized by an operator or the like.

Further, the display controller 307 displays the circular icon expressed at the representative point of the object having the shortest distance determined to be within the first threshold by the determination part 306, in association with the circular icon expressed at the representative point on the counterweight 9 side that is the closest to the object. In the present embodiment, by associating the representative point of the object with the representative point of the counterweight 9 by an arrow, an operator can recognize a correspondence relationship between the object that can contact the counterweight 9, and the representative point of the counterweight 9. Therefore, by causing the crawler crane 100 to slew or move considering the correspondence relationship, an operator can reduce the possibility of contacting the object, and ensure higher safety.

The present embodiment is an example in which an arrow connecting the icons is displayed. However, the display of an arrow is not limiting, and other modes may be used as long as a correspondence relationship can be recognized. For example, the color of the icon on the object side and the color of the icon on the counterweight 9 side may be made the same for recognition of a correspondence relationship.

Further, as a method other than the method of making the colors of icons the same for confirming a correspondence relationship, display modes of icons, such as shapes, sizes, blinking modes, and the like, may be associated with each other in order to express a correspondence relationship between the object and the representative point of the counterweight 9.

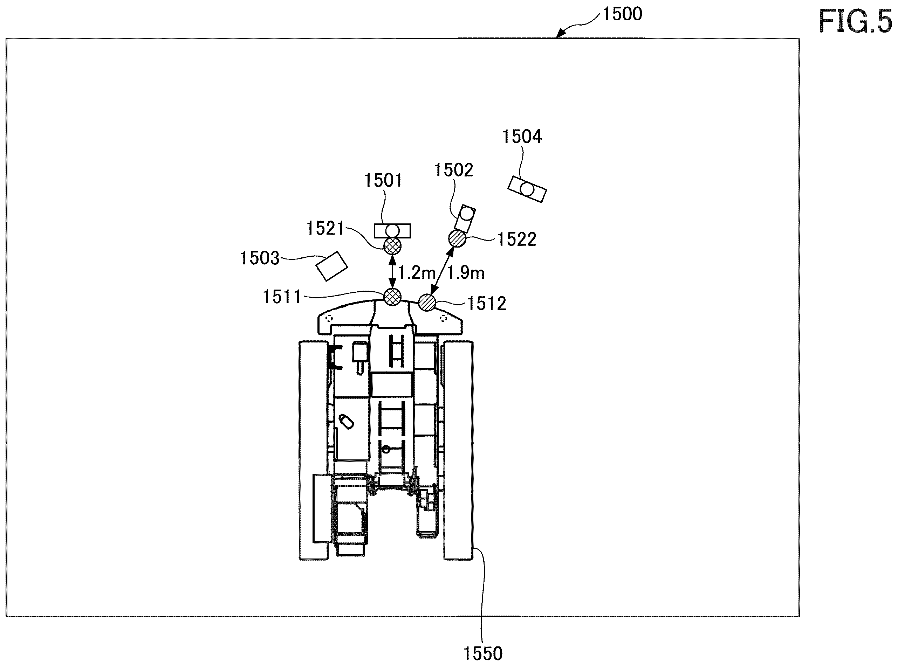

FIG. 5 is a diagram illustrating an example of a monitor screen displayed by the display controller 307 according to the present embodiment. The monitor screen illustrated in FIG. 5 is a display screen illustrating a case in which the above-described virtually three-dimensional space is viewed from a viewpoint provided in an upward direction. A monitor screen 1500 displays a crane shape display image 1550 at a position where the crawler crane 100 exists in the virtually three-dimensional space.

The virtually three-dimensional space includes the three-dimensional shape models of the objects detected by the distance measurement device S7. Therefore, the monitor screen 1500 displays a three-dimensional shape model 1501 of a human, a three-dimensional shape model 1502 of a human, a three-dimensional shape model 1503 of an object, and a three-dimensional shape model 1504 of a human.

The shortest distance calculated by the calculation part 305 is within 2.0 m for the humans expressed by the three-dimensional shape models 1501 and 1502. Therefore, the crane shape display image 1550 includes a circular icon 1511 displayed at a position the closest to the three-dimensional shape model 1501 of the corresponding human, and a circular icon 1512 displayed at a position the closest to the three-dimensional shape model 1502 of the corresponding human.

Further, the three-dimensional shape model 1501 of the corresponding human includes a circular icon 1521 displayed at a position the closest to the crawler crane 100, and the three-dimensional shape model 1502 of the corresponding human includes a circular icon 1522 displayed at a position the closest to the crawler crane 100.

Further, an arrow connecting the circular icon 1511 and the circular icon 1521, and a numerical value (1.2 m) indicating the distance between the circular icon 1511 and the circular icon 1521 are displayed.

Similarly, an arrow connecting the circular icon 1512 and the circular icon 1522, and a numerical value (1.9 m) indicating the distance between the circular icon 1512 and the circular icon 1522 are displayed.

The display controller 307 according to the present embodiment displays the circular icons in a different color in accordance with the shortest distance between the object and the crawler crane 100. For example, the color of the circular icons may be differed with a reference being 1.5 m.

The distance between the circular icon 1511 and the circular icon 1521 is shorter than 1.5 m. Thus, the circular icon 1511 and the circular icon 1521 are displayed in red. Also, the arrow connecting the circular icon 1511 and the circular icon 1521 is displayed in red.

The distance between the circular icon 1512 and the circular icon 1522 is longer than 1.5 m. Thus, the circular icon 1511 and the circular icon 1521 are displayed in yellow. Also, the arrow connecting the circular icon 1512 and the circular icon 1522 is displayed in yellow.

In the present embodiment, the circular icons are displayed in a different color in accordance with the shortest distance between the object and the crawler crane 100. Therefore, an operator can readily recognize the distance to the object in accordance with the color of the circular icons or the like when referring to the display device D1. This facilitates understanding of the surrounding state. Therefore, the operator can operate the crawler crane 100 considering the surrounding state, and ensure higher safety.

The three-dimensional shape model 1503 of the object is within 2.0 m from the crawler crane 100, but has a height of 1.3 m or less. Thus, display of circular icons for representative points connecting the crawler crane 100 and the three-dimensional shape model 1503 of the object in the shortest distance is suppressed.

That is, the display controller 307 according to the present embodiment displays, in the crane shape display image 1550, a representative point (an example of the first part) connecting an object (an example of the first object) having a height equal to or more than 1.3 m (an example of the predetermined height) to the crawler crane 100 in the shortest distance, in a display mode that is different from that in which the other regions are displayed, i.e., using a circular icon (an example of the different mode of display). On the other hand, the display controller 307 displays, in the crane shape display image 1550, a representative point (an example of the first part) connecting an object (an example of the second object) having a height less than 1.3 m (an example of the predetermined height) to the crawler crane 100 in the shortest distance, in a display mode same as that in which the other regions are displayed, i.e., without using a circular icon.

The present embodiment has been described using an example in which whether or not to display the circular icon is determined in accordance with whether or not the object has a height that can contact the counterweight 9. However, the present embodiment does not limit the reference for determining whether or not to display the circular icon (whether or not to change the display mode) to the height of the counterweight 9. That is, the reference for determining whether or not to display the circular icon may be the height of a part forming a work machine (including the crawler crane 100), suppression of contact of the part with an object being desired.

According to the present embodiment, in accordance with the height of the counterweight 9 (an example of the predetermined part of the work machine) of the crawler crane 100, it is possible to perform switching between display and non-display of the circular icon for the object that is close to the crawler crane 100. Thus, the operator or the like can understand the object that can contact the counterweight 9. Therefore, the operator can confirm the object that can contact the crawler crane when performing slewing or the like with the crawler crane 100, i.e., the operator can readily understand the surrounding state. Therefore, higher safety can be ensured.

Also, the three-dimensional shape model 1504 of the human is far from the crawler crane 100 by longer than 2.0 m. Thus, display of a circular icon on the crawler crane 100 side and a representative point of the three-dimensional shape model 1504 of the object is suppressed.

That is, when the shortest distance between the detected object and the counterweight 9 is less than the first threshold, i.e. 2.0 m, the display controller 307 displays the circular icon at the representative point of the counterweight 9 the closest to the object in order to differ the display mode from that of the other regions. On the other hand, when the shortest distance between the detected object and the counterweight 9 is equal to or more than the first threshold, i.e., 2.0 m, the display controller 307 does not display a circular icon at the representative point of the counterweight 9 the closest to the object, i.e., the display mode of the representative point remains unchanged.

In the present embodiment, the operator can recognize the distance between the object and the counterweight 9 in accordance with the presence or absence of display of the circular icon, and thus can readily understand the surrounding state. Therefore, higher safety can be ensured.

The operator can recognize the object close to the crawler crane 100 by referring to the circular icons 1521 and 1522.

Further, the operator can recognize the representative point on the crawler crane 100 side close to the object, by referring to the circular icons 1511 and 1512 expressed in the crane shape display image 1550. That is, the operator can operate the crawler crane 100 while understanding the state around the representative points of the crawler crane 100 near the objects, by paying close attention to the representative points indicated by the circular icons 1511 and 1512 expressed on the crane shape display image 1550. Therefore, according to the present embodiment, it is possible to suppress contact of the representative points with the object, and ensure higher safety.

Also, on the monitor screen of the present embodiment, display of the circular icon corresponding to the object having a height of 1.3 m or less is suppressed. That is, the operator can understand the state of the object that can contact the counterweight 9 during slewing or the like, without paying close attention to the object that cannot influence the counterweight 9 moving during slewing or the like. Therefore, the operator of the crawler crane 100 of the present embodiment can readily understand the surrounding state.

Further, the monitor screen 1500 illustrated in FIG. 5 is not limited to a bird's-eye view display illustrating the virtually three-dimensional space from an upper viewpoint. The monitor screen 1500 may be a screen displaying the virtually three-dimensional space from the side viewpoint of the crawler crane 100. Moreover, the display controller 307 may change the viewpoint in accordance with an operation received by the operation reception part 301.

Also, display performed by the display controller 307 according to the present embodiment is not limited to the display of the monitor screen 1500 illustrated in FIG. 5, and other display modes may be used.

For example, rather than referring to the virtually three-dimensional space from an upper viewpoint, the display controller 307 may delete height information included in the virtually three-dimensional space, generate a bird's-eye view image two-dimensionally expressing the surroundings of the crawler crane 100, and display the bird's-eye view image.

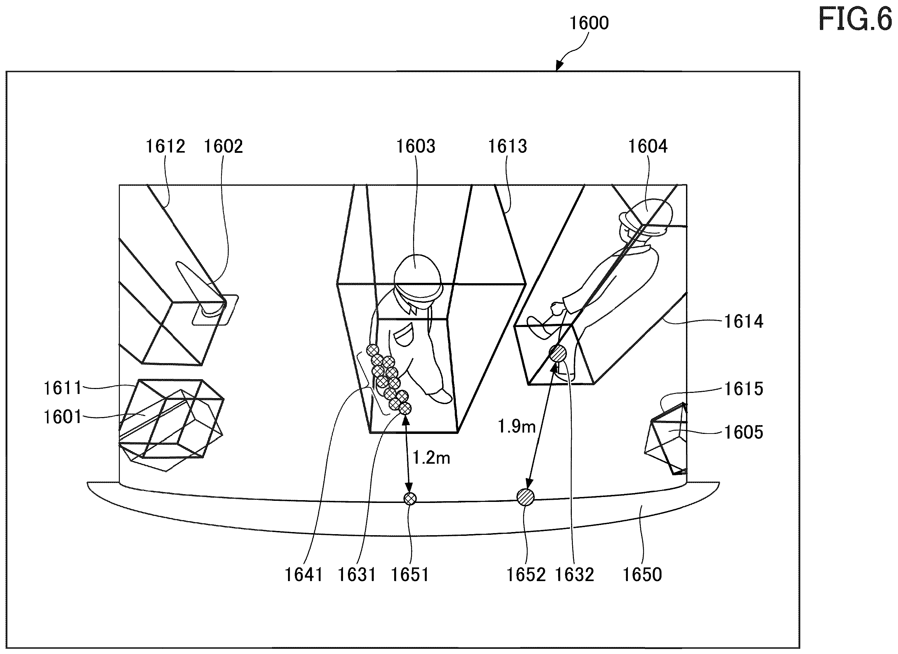

FIG. 6 is a diagram illustrating an example of the monitor screen displayed by the display controller 307 according to the present embodiment. A monitor screen 1600 illustrated in FIG. 6 displays image information obtained through photographing by the photographing device S6.

Calibration is assumed to be performed between the photographing device S6 and the distance measurement device S7 according to the present embodiment. Therefore, the controller 30 can recognize a correspondence relationship between regions expressed on image information obtained through photographing by the photographing device S6, and positions of objects detected by the distance measurement device S7.

Therefore, the display controller 307 overlaps, for display, a result of surrounding monitoring, which indicates the position of the object detected by the distance measurement device S7, with the image information obtained through photographing by the photographing device S6.

In the example illustrated in FIG. 6, an object 1601, an object 1602, a human 1603, a human 1604, and an object 1605 expressed on the image information are also detected by the distance measurement device S7.

Therefore, the display controller 307 displays rectangular parallelepiped wire frames, on the monitor screen 1600, in the regions corresponding to the three-dimensional shape models generated by the three-dimensional object detector 304, so as to enclose the three-dimensional shape models.

Thus, a wire frame 1611 corresponding to the object 1601, a wire frame 1612 corresponding to the object 1602, a wire frame 1613 corresponding to the human 1603, a wire frame 1614 corresponding to the human 1604, and a wire frame 1615 corresponding to the object 1605 are displayed. In accordance with this display, an operator can recognize whether or not the object is detected.

Further, the display controller 307 displays information in accordance with a calculation result obtained by the calculation part 305 and a determination result obtained by the determination part 306.

Specifically, the display controller 307 displays, on the monitor screen 1600, circular icons 1631 and 1651 in a region corresponding to representative points connecting a three-dimensional shape model of the human 1603 and the counterweight 9 in the shortest distance.

Further, the display controller 307 displays, on the monitor screen 1600, circular icons 1632 and 1652 in a region corresponding to representative points connecting a three-dimensional shape model of the human 1604 and the counterweight 9 in the shortest distance.

Further, the present embodiment does not intend any limitation to the method of displaying the circular icons only in the region corresponding to the representative points connecting a three-dimensional shape model of an object and the counterweight 9 in the shortest distance. For example, the display controller 307 may identify, on the monitor screen 1600, a point cloud within a predetermined range (e.g., 50 centimeters (cm)) from the representative point at which the circular icon 1631 is displayed in the three-dimensional shape model of the human 1603, and display a circular icon 1641 at each of the points included in the identified point cloud. Although FIG. 6 illustrates an example in which a plurality of circular icons are displayed on the object side, a plurality of circular icons may be displayed on the counterweight 9 side. Thus, the operator can understand a part to be paid attention to around the representative points. Therefore, higher safety can be ensured.

Further, the display controller 307 displays information for recognizing a positional relationship between the detected object and the counterweight 9. The monitor screen illustrated in FIG. 6 displays an arrow connecting the circular icon 1631 and the circular icon 1651, and a length (shortest distance) of the arrow, i.e., 1.2 m. Also, the monitor screen illustrated in FIG. 6 displays an arrow connecting the circular icon 1632 and the circular icon 1652, and a length (shortest distance) of the arrow, i.e., 1.9 m. The operator can understand a correspondence relationship between the detected human and the counterweight 9.

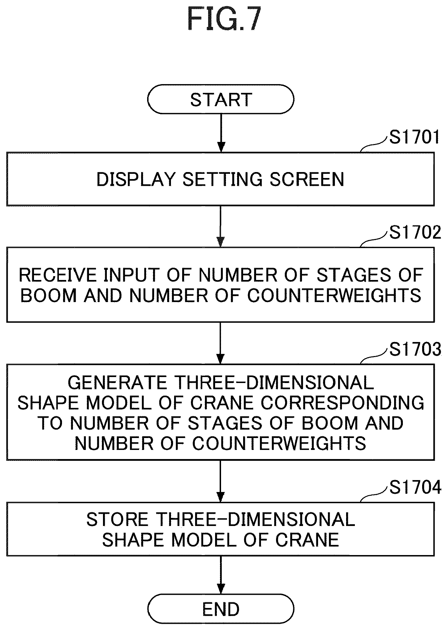

Next, a processing procedure executed by the controller 30 according to the present embodiment will be described. FIG. 7 is a flowchart illustrating a processing procedure performed by the controller 30 according to the present embodiment when assembling the crawler crane 100.

First, the display controller 307 displays a setting screen of the crawler crane 100 (S1701).

Next, from the operation input device D2 via a touch panel provided on the setting screen, the operation reception part 301 receives an input of the number of stages of the boom 4 and the number of mounted counterweights 9 of the crawler crane 100 after assembly (S1702).

By referring to the crane three-dimensional shape storage 311, the crane shape generation part 302 generates a three-dimensional shape model of the crawler crane 100 corresponding to the input number of the stages of the boom 4 and the input number of the counterweights 9 (S1703).

The crane shape generation part 302 stores the three-dimensional shape model of the crawler crane 100 in the auxiliary storage device (S1704).

In the present embodiment, when the operation reception part 301 receives, from the setting screen, an input of information of the configuration of the crawler crane 100, the crane shape generation part 302 generates a three-dimensional shape model of the crawler crane 100 in accordance with the input information. Then, the display controller 307 displays, on the monitor screen or the like, at least a part of the generated three-dimensional shape model of the crawler crane 100. That is, even if the configuration of the crawler crane 100 is different for each work site, a three-dimensional shape model corresponding to the work site is displayed. When calculating the shortest distance, the calculation part 305 uses the shape and dimensions of the three-dimensional shape model of the crawler crane 100, thereby being able to increase accuracy of calculation of the distance between the crawler crane 100 and surrounding objects. Moreover, the three-dimensional shape model corresponding to the current crawler crane 100 is displayed, and thus the operator does not substantially feel inconvenienced by display of a three-dimensional shape model that is different from the current crawler crane 100.

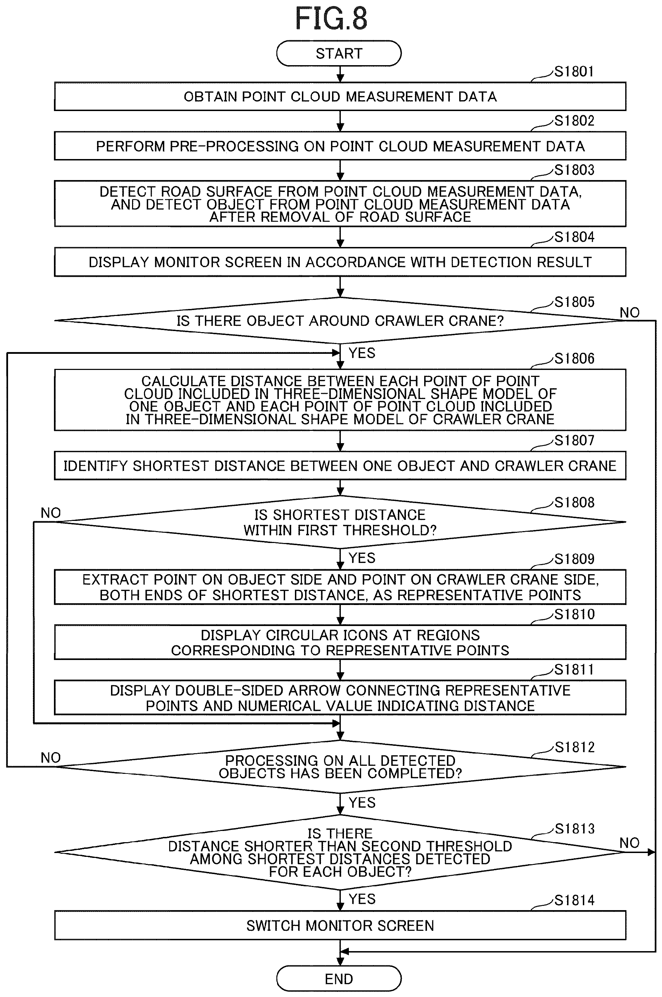

Next, a processing procedure through which the controller 30 according to the present embodiment displays a monitor screen will be described. FIG. 8 is a flowchart illustrating a processing procedure through which the controller 30 according to the present embodiment displays a monitor screen.

First, the obtainment part 303 obtains point cloud measurement data from the distance measurement devices S7R and S7L (S1801).

Next, the three-dimensional object detector 304 performs pre-processing on the point cloud measurement data (S1802). The pre-processing is as described above, and thus description thereof is omitted.

Subsequently, the three-dimensional object detector 304 detects a road surface from the pre-processed point cloud measurement data, and detects an object existing around the crawler crane 100 from the point cloud measurement data after removal of the road surface (S1803). The detection process also includes generation of a three-dimensional shape model of the detected object. A specific object detection method is as described above, and description thereof will be omitted.

The display controller 307 displays a monitor screen in accordance with a detection result (S1804). The monitor screen may be, for example, a bird's-eye view image in which the viewpoint is set above the crawler crane 100, as illustrated in FIG. 5. The crane shape display image 1550 is disposed at the center of the bird's-eye view image. Further, if an object is detected, a three-dimensional shape model of the object is displayed on the monitor screen in accordance with the direction and distance from the center of the crawler crane 100. Thus, a positional relationship between the crawler crane 100 and the object is displayed on the display device D1.

The calculation part 305 determines whether or not there is an object around the crawler crane 100 through a detection process (S1805). If the calculation part 305 determines that there is no object around the crawler crane 100 (S1805: NO), the process is ended.

If the calculation part 305 determines that there is an object around the crawler crane 100 through the detection process (S1805: YES), the calculation part 305 calculates a distance between each of the points of a point cloud included in a three-dimensional shape model of one of the detected objects, and each of the points of a point cloud included in a three-dimensional shape model of the crawler crane 100 (S1806).

The calculation part 305 identifies the shortest distance between the object and the crawler crane 100 from the calculated distances (S1807).

The determination part 306 determines whether or not the calculated shortest distance is within a first threshold (e.g., 2 m) (S1808). If the determination part 306 determines that the calculated shortest distance is longer than the first threshold (e.g., 2 m) (S1808: NO), the process proceeds to S1812.

On the other hand, if the determination part 306 determines that the calculated shortest distance is within the first threshold (e.g., 2 m) (S1808: YES), the determination part 306 extracts a point on the object side and a point on the crawler crane 100 side, i.e., both ends of the shortest distance, as representative points (S1809).

The display controller 307 displays circular icons at regions corresponding to the extracted representative points on the monitor screen (S1810). The color of the displayed circular icons corresponds to the distance between the representative points.

The display controller 307 displays an arrow connecting the representative points, and a numerical value indicating the shortest distance (S1811).

The determination part 306 determines whether or not the processing on all the detected objects has been completed (S1812). If the determination part 306 determines that the processing on all the detected objects has not been completed (S1812: NO), the process is performed again from S1806.

On the other hand, if the determination part 306 determines that the processing on all the detected objects has been completed (S1812: YES), the determination part 306 determines whether or not there is a distance shorter than a second threshold (e.g., 0.8 m) among the shortest distances calculated for each object (S1813). If the determination part 306 determines that there is no distance shorter than the second threshold (e.g., 0.8 m) (S1813: NO), the process is ended.

On the other hand, if the determination part 306 determines that there is a distance shorter than the second threshold (e.g., 0.8 m) (S1813: YES), the display controller 307 performs switching to a monitor screen for invoking an operator's attention (S1814). The switched monitor screen will be described below.

In the present embodiment, by the above-described control performed by the controller 30, an operator can recognize a surrounding state of the crawler crane 100.

If the shortest distance between an object and a part of the counterweight 9 is shorter than the second threshold (e.g., 0.8 m), the display controller 307 changes a display mode of the monitor screen (an example of the screen) in which the part of the counterweight 9 is expressed. In the present embodiment, by changing the display mode of the monitor screen displayed by the display controller 307, the operator can recognize the current state. Therefore, the operator can perform an operation considering the current state, and ensure higher safety.

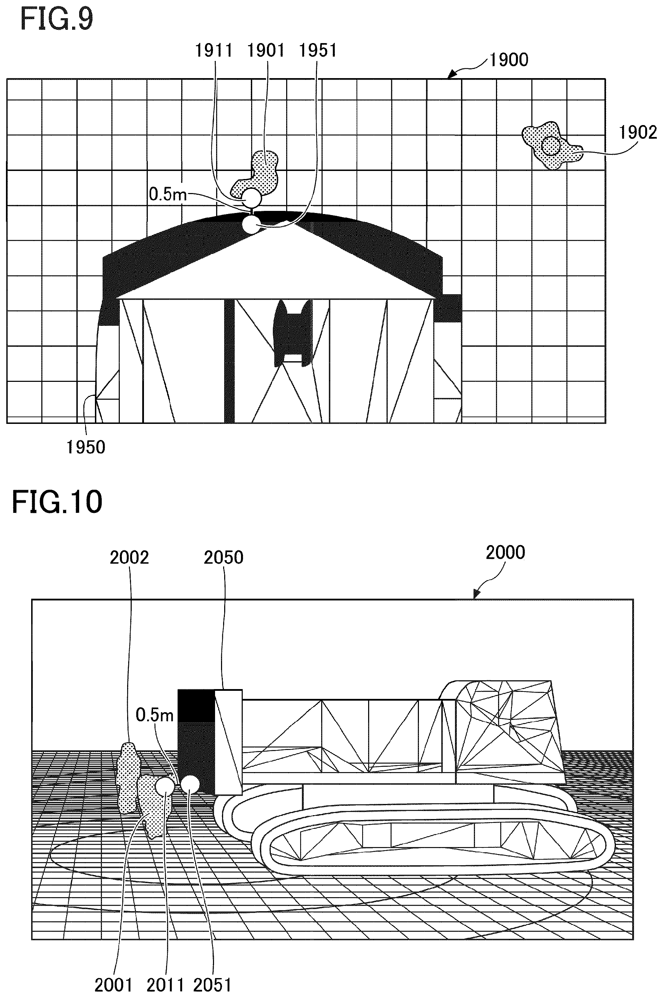

FIG. 9 is a diagram illustrating an example of a monitor screen that is displayed, for invoking an operator's attention, by the display controller 307 according to the present embodiment. A monitor screen 1900 illustrated in FIG. 9 is a screen enlarged compared to the monitor screen 1500 illustrated in FIG. 5.

The monitor screen 1900 displays a crane shape display image 1950 illustrating a three-dimensional shape model of the crawler crane 100 from a viewpoint in an upward direction. Further, the monitor screen 1900 may display a scale. On the monitor screen illustrated in FIG. 9, the scale is displayed in units of one meter.

On the monitor screen 1900 illustrated in FIG. 9, three-dimensional shape models 1901 and 1902 of humans detected by the distance measurement devices S7 are displayed as in the monitor screen 1500 illustrated in FIG. 5.

The human expressed by the three-dimensional shape model 1901 has the shortest distance within 2.0 m, calculated by the calculation part 305. Therefore, on the crane shape display image 1950, a circular icon 1951 is displayed at a position the closest to the three-dimensional shape model 1901 of the human (the representative point forming the shortest distance), and on the three-dimensional shape model 1901 of the human, a circular icon 1911 is displayed at a position the closest to the counterweight 9 (the representative point forming the shortest distance).

Further, an arrow connecting the circular icon 1911 and the circular icon 1951, and a numerical value (0.5 m) indicating the distance between the circular icon 1911 and the circular icon 1951 are displayed.

Also, the three-dimensional shape model 1902 of the human is far from the crawler crane 100 by longer than 2.0 m, and thus no circular icon is displayed at positions the closest to the crawler crane 100, on the crawler crane 100 side and on the three-dimensional shape model 1902 of the object.

As described above, the monitor screen 1900 illustrated in FIG. 9 is enlarged compared to the monitor screen 1500. Thus, an operator can recognize the state near the counterweight 9 of the crawler crane 100 in more detail.

The circular icons 1911 and 1951 connecting the shortest distance shorter than a second threshold (e.g., 0.8 m) may be displayed in a display mode that is different from that of the circular icons illustrated in FIG. 5. For example, the circular icons 1911 and 1951 may be blinking, or the circular icons 1911 and 1951 may be displayed in a color that is different from that of the circular icons illustrated in FIG. 5.

Similarly, an arrow connecting the circular icons 1911 and 1951 may be displayed in a display mode that is different from that of the arrow illustrated in FIG. 5. For example, an arrow to be displayed may be thick or blinking.

In FIG. 9, the vicinity of the counterweight 9 is enlarged. This can invoke an operator's attention. Also, the operator can recognize a detailed state of the vicinity of the counterweight 9.

The present embodiment does not limit the monitor screen for invoking an operator's attention to the monitor screen 1900 illustrated in FIG. 9. Then, a different mode of the monitor screen for invoking an operator's attention will be described.

FIG. 10 is a diagram illustrating an example of the monitor screen that is displayed, for invoking an operator's attention, by the display controller 307 according to the present embodiment. A monitor screen 2000 illustrated in FIG. 10 is for recognizing a positional relationship between an object (e.g., a human) and the counterweight 9 that are in the shortest distance that is shorter than a second threshold (e.g., 0.8 m). Specifically, the monitor screen 2000 is a screen that laterally illustrates a three-dimensional shape model 2001 of the object (e.g., a human) and a three-dimensional shape model 2050 of the crawler crane 100 including the counterweight 9. The monitor screen 2000 illustrated in FIG. 10 also displays a three-dimensional shape model 2002 of a surrounding object.

That is, the display controller 307 switches the viewpoint from an upward direction to a viewpoint from a side direction in the generated virtually three-dimensional space. Further, the display controller 307 causes the viewpoint to be closer to the three-dimensional shape model 2001 of the object (e.g., a human) in the shortest distance that is shorter than the second threshold (e.g., 0.8 m). By this control, the monitor screen 2000 is displayed.

Further, a scale may be displayed on the monitor screen 2000. On the monitor screen 2000 illustrated in FIG. 10, the scale is displayed in a unit of 0.5 m.

The shortest distance between the object (e.g., a human), expressed by the three-dimensional shape model 2001, and the counterweight 9 is calculated to be 0.5 m by the calculation part 305. Therefore, a circular icon 2051 is displayed at a position on the three-dimensional shape model 2050 of the crawler crane 100, the position being the closest to the three-dimensional shape model 2001 of the object (the representative point forming the shortest distance), and a circular icon 2011 is displayed at a position on the three-dimensional shape model 2001 of the object, the position being the closest to the three-dimensional shape model 2050 of the counterweight 9 (the representative point forming the shortest distance).

Further, an arrow connecting the circular icon 2011 and the circular icon 2051, and a numerical value (0.5 m) indicating the distance between the circular icon 2011 and the circular icon 2051 are displayed.

As described above, the monitor screen 2000 illustrated in FIG. 10 is enlarged compared to the monitor screen 1500. In addition, the monitor screen 2000 is displayed from the side direction (from the changed viewpoint) unlike in the monitor screen 1500. Thus, an operator can recognize the state near the counterweight 9 of the crawler crane 100 in more detail.

The present embodiment has been described using an example in which the circular icons are displayed on both of the counterweight 9 side and the object side on the monitor screen. However, the present embodiment does not intend any limitation to the method of displaying the circular icons on both of the counterweight 9 side and the object side. For example, a circular icon may be displayed only on the counterweight 9 side. That is, even if a circular icon is displayed only on the counterweight 9 side on the monitor screen, an operator or the like can recognize a part of the counterweight 9 that can contact an object, and thus ensure higher safety.

As a further aspect, a circular icon may be displayed only on the object side. That is, even if a circular icon is displayed only on the object side on the monitor screen, an operator or the like can recognize a part of the object that can contact the counterweight 9, and thus ensure higher safety.

The present embodiment has been described using a manner in which if the determination part 306 determines that there is a distance shorter than the second threshold among the shortest distances calculated for each object, the display controller 307 performs switching to the monitor screen for invoking an operator's attention. However, the present embodiment does not intend any limitation to the method of performing switching to the monitor screen for invoking an operator's attention if the determination part 306 determines that there is a distance shorter than the second threshold. If the determination part 306 determines that there is a distance shorter than the second threshold, the display controller 307 may change the display mode of the screen before the determination that there is a distance shorter than the second threshold. The change in the display mode of the screen may be a change to a display mode in which representative points can be more clearly understood. In addition to the above-described switching of the screen, the change in the display mode of the screen may be, for example, enlarged display without changing the viewpoint, switching to a screen that displays a photographed image obtained from a photographing device having a resolution higher than that of the photographing device S6, or the like. The photographing device having a resolution higher than that of the photographing device S6 may be provided at the crawler crane 100, or may be provided at a place other than the crawler crane 100, e.g., at a work site.

### (Modified Example 1)

The above-described embodiment is an example in which the circular icons are displayed on both of the crawler crane 100 and the object having the shortest distance within the first threshold, i.e., 2.0 m. However, the above-described embodiment does not intend any limitation to the mode in which the circular icons are displayed on both of the crawler crane 100 and the object having the shortest distance within the first threshold, i.e., 2.0 m.

As a modified example, the display controller 307 may display circular icons at both ends of the shortest distances between all the detected objects and the crawler crane 100, and arrows connecting the circular icons. In this case, the display controller 307 may differ the color of the circular icons in accordance with the shortest distance. For example, a circular icon may be displayed in the same color as in the above-described embodiment when the shortest distance is within 2.0 m, and a green circular icon may be displayed when the shortest distance is longer than 2.0 m.

As a further modified example, the display controller 307 displays circular icons at both ends of the shortest distances between all the detected objects and the crawler crane 100, but an arrow connecting the circular icons may be displayed only between the crawler crane 100 and an object having the shortest distance within the first threshold, i.e. 2.0 m.

Also, the above-described embodiment and the present modified example do not limit the change in the display mode in accordance with the shortest distance to the change in the color of the circular icons. For example, the display controller 307 may change the shape of an icon in accordance with the shortest distance, or may change the size of an icon in accordance with the shortest distance. Further, the display controller 307 may change the thickness of an arrow in accordance with the shortest distance.

### (Modified Example 2)

The above-described embodiment and modified example have been described using an example in which a monitor screen is displayed to an operator of the crawler crane 100. However, the above-described embodiment and modified example do not intend any limitation to the example in which the monitor screen is displayed to the operator who rides on the cab 10 of the crawler crane 100. For example, the monitor screen may be displayed to the operator who operates the crawler crane 100 in a remote operation room. In this case, a controller configured to perform the process illustrated in the above-described embodiment is not limited to the controller 30 of the crawler crane 100, and the process illustrated in the above-described embodiment may be performed by a controller in the remote operation room.

### (Modified Example 3)

The above-described embodiment and modified examples have been described using an example in which the crawler crane 100 includes the distance measurement device S7, and a monitor screen is displayed in accordance with a detection result of the distance measurement device S7. However, the above-described embodiment and modified examples do not intend any limitation to the manner in which the crawler crane 100 includes the distance measurement device S7. A fixed-point measurement device provided at a work site may have functions similar to those of the distance measurement device S7 in the above-described embodiment. The fixed-point measurement device may be provided, for example, on a pole standing at a work site, and may be configured to measure the state of the work site from a bird's eye view.

The controller 30 of the crawler crane 100 receives point cloud measurement data from the fixed-point measurement device, and position information of the world coordinate system where an object exists.

The controller 30 of the crawler crane 100 generates a three-dimensional shape model of the object existing around the crawler crane 100 in accordance with the point cloud measurement data received from the fixed-point measurement device. Then, in accordance with the received position information of the object in the world coordinate system and the position information of the crawler crane 100 in the world coordinate system, a relative positional relationship between the crawler crane 100 and the object is derived.

Then, the controller 30 of the crawler crane 100 performs a process similar to that in the above-described embodiment. Thus, a monitor screen similar to that in the above-described embodiment is displayed.

Further, the present modified example does not intend any limitation to the method by which the controller 30 of the crawler crane 100 performs the above-described control. For example, a remote controller provided in a remote operation room for remotely controlling the crawler crane 100 may receive point cloud measurement data from the fixed-point measurement device, and perform the above-described process.

Further, a controller of a monitoring server provided separately from the crawler crane 100 may perform the above-described process. In this case, a manager of the monitoring server may recognize the state of a work site by referring to a screen similar to that in the above-described embodiment.

The above-described embodiment and modified examples have been described using a case in which the crawler crane 100 is used as a work machine. However, the above-described embodiment and modified examples do not limit the work machine to the crawler crane 100, and may be applied to an excavator configured to be slewable and movable in accordance with an operation of an operator. Further, the above-described embodiment and modified examples may be applied to a forklift or an overhead crane configured to be movable in accordance with an operation of an operator, or may be applied to a fixed power crane. Moreover, the above-described embodiment and modified examples may be applied to a road machine including an asphalt finisher or the like.

### <Effects>

The monitor screen displayed by the display controller 307 in the above-described embodiment and modified examples display, with circular icons, parts close to the object detected near the crawler crane 100. That is, the part of the crawler crane 100 near the object is displayed in a display mode that is different from that in which the other parts of the crawler crane 100 are displayed. Therefore, an operator or the like readily recognizes the part of the crawler crane 100 close to the object by referring to the monitor screen or the like. In addition, an operator or the like readily performs an operation such that this part does not contact the object, and thus ensures higher safety.

In addition, the monitor screen displayed by the display controller 307 in the above-described embodiment displays, with a circular icon, a part of the object detected in the surroundings, the part being close to the counterweight 9. That is, the part of the object, detected in the surroundings, being close to the counterweight 9 is displayed in a display mode that is different from that in which the other parts are displayed. An operator or the like can recognize the part of the object existing in the surroundings, the part being close to the crawler crane 100, by referring to the monitor screen or the like. Therefore, an operator readily performs an operation such that this part does not contact the crawler crane 100, and thus ensures higher safety.

The embodiments of the surrounding monitoring device for the work machine and the work machine according to the present invention have been described above. However, the present invention is not limited to the above embodiments and the like. Various changes, modifications, substitutions, additions, deletions, and combinations are possible within the scope of the claims recited. These also fall within the technical scope of the present invention.

### REFERENCE SIGNS LIST

- 100: Crawler crane
- 1: Lower traveling body
- 2: Slewing mechanism
- 3: Upper slewing body
- AT: Attachment
- 4: Boom
- 5: Mast
- 6: Backstop
- 7: Main winding rope
- HK: Hook
- 9: Counterweight
- 10: Cab
- S6: Photographing device
- S7: Distance measurement device
- 200: Surrounding monitoring device
- 30: Controller
- 301: Operation reception part
- 302: Crane shape generation part
- 303: Obtainment part
- 304: Three-dimensional object detector
- 305: Calculation part
- 306: Determination part
- 307: Display controller
- D1: Display device
- D2: Operation input device

## Claims

1. A surrounding monitoring device (200) for a work machine (100), the surrounding monitoring device (200) comprising:
a controller (30) configured to perform control of functions of the surrounding monitoring device (200);
a photographing device (S6) and a distance measurement device (S7) configured to obtain a surrounding state of the work machine (100); **characterized in that** the surrounding monitoring device (200) further comprises
a display device (D1) configured to display a first part and a second part of the work machine (100) included in shape information of the work machine (100) such that the first part is displayed in a display mode that is different from a display mode in which the second part is displayed, the first part being closer to an object than is the second part, and the object being detected around the work machine (100) by a detector (304).

2. The surrounding monitoring device (200) according to claim 1, wherein
the display device (D1) is configured to display a third part and a fourth part included in the object such that the third part is displayed in a display mode that is different from a display mode in which the fourth part is displayed, the third part being closer to the first part of the work machine (100) than is the fourth part.

3. The surrounding monitoring device (200) according to claim 2, wherein
the display device (D1) is configured to display the first part included in the shape information, in association with the third part included in the object.

4. The surrounding monitoring device (200) according to claim 1, wherein
the object detected by the detector (304) includes a first object having a height equal to or more than a predetermined height, and a second object having a height less than the predetermined height, and
the display device (D1) is configured to display the first part closer to the first object than is the second part in the display mode that is different from the display mode in which the second part is displayed, or display the first part closer to the second object than is the second part in the display mode that is same as the display mode in which the second part is displayed.

5. The surrounding monitoring device (200) according to claim 4, wherein
the predetermined height corresponds to a height of a predetermined part of the work machine (100).

6. The surrounding monitoring device (200) according to claim 1, wherein
the display device (D1) is configured to differ the display mode of the first part in accordance with a distance between the object and the first part.

7. The surrounding monitoring device (200) according to claim 6, wherein
the display device (D1) is configured to display, in a case in which the distance between the object and the first part is less than a first threshold, the first part in the display mode that is different from the display mode in which the second part is displayed, or display, in a case in which the distance between the object and the first part is greater than the first threshold, the first part in the display mode that is same as the display mode in which the second part is displayed.

8. The surrounding monitoring device (200) according to claim 6, wherein
in a case in which the distance between the object and the first part is less than a second threshold, the display device (D1) is configured to change the display mode of a screen on which the first part is expressed, from a display mode of the screen before the distance between the object and the first part is less than the second threshold.

9. The surrounding monitoring device (200) according to claim 1, wherein
in response to receiving an input of information of a configuration of the work machine (100), the display device (D1) is configured to display at least a part of the shape information of the work machine (100) generated in accordance with the information whose input is received.

10. A work machine (100), comprising:
the surrounding monitoring device (200) of claim 1.

## Patentansprüche

1. Umgebungsüberwachungsvorrichtung (200) für eine Arbeitsmaschine (100), wobei die Umgebungsüberwachungsvorrichtung (200) umfasst:
eine Steuerung (30), die so konfiguriert ist, dass sie Steuerung von Funktionen der Umgebungsüberwachungsvorrichtung (200) durchführt;
eine Aufnahmevorrichtung (S6) und eine Abstandsmessvorrichtung (S7), die so konfiguriert sind, dass sie einen Umgebungszustand der Arbeitsmaschine (100) erhalten; **dadurch gekennzeichnet, dass** die Umgebungsüberwachungsvorrichtung (200) ferner umfasst
eine Anzeigevorrichtung (D1), die so konfiguriert ist, dass sie einen ersten Teil und einen zweiten Teil der Arbeitsmaschine (100), die in Forminformationen der Arbeitsmaschine (100) enthalten sind, so anzeigt, dass der erste Teil in einem Anzeigemodus angezeigt wird, der sich von einem Anzeigemodus unterscheidet, in dem der zweite Teil angezeigt wird, wobei der erste Teil näher an einem Objekt ist als der zweite Teil und das Objekt um die Arbeitsmaschine (100) herum durch einen Detektor (304) detektiert wird.

2. Umgebungsüberwachungsvorrichtung (200) nach Anspruch 1, wobei
die Anzeigevorrichtung (D1) so konfiguriert ist, dass sie einen dritten Teil und einen vierten Teil, die in dem Objekt enthalten sind, so anzeigt, dass der dritte Teil in einem Anzeigemodus angezeigt wird, der sich von einem Anzeigemodus unterscheidet, in dem der vierte Teil angezeigt wird, wobei der dritte Teil näher an dem ersten Teil der Arbeitsmaschine (100) ist als der vierte Teil.

3. Umgebungsüberwachungsvorrichtung (200) nach Anspruch 2, wobei
die Anzeigevorrichtung (D1) so konfiguriert ist, dass sie den ersten Teil, der in den Forminformationen enthalten ist, in Verknüpfung mit dem dritten Teil, der in dem Objekt enthalten ist, anzeigt.

4. Umgebungsüberwachungsvorrichtung (200) nach Anspruch 1, wobei
das Objekt, das von dem Detektor (304) detektiert wird, ein erstes Objekt mit einer Höhe, die gleich oder größer als eine vorbestimmte Höhe ist, und ein zweites Objekt mit einer Höhe, die kleiner als die vorbestimmte Höhe ist, umfasst, und
die Anzeigevorrichtung (D1) so konfiguriert ist, dass sie den ersten Teil näher an dem ersten Objekt anzeigt als den zweiten Teil in dem Anzeigemodus, der sich von dem Anzeigemodus unterscheidet, in dem der zweite Teil angezeigt wird, oder den ersten Teil näher an dem zweiten Objekt anzeigt als den zweiten Teil in dem Anzeigemodus, der der gleiche ist wie der Anzeigemodus, in dem der zweite Teil angezeigt wird.

5. Umgebungsüberwachungsvorrichtung (200) nach Anspruch 4, wobei
die vorbestimmte Höhe einer Höhe eines vorbestimmten Teils der Arbeitsmaschine (100) entspricht.

6. Umgebungsüberwachungsvorrichtung (200) nach Anspruch 1, wobei
die Anzeigevorrichtung (D1) so konfiguriert ist, dass sie den Anzeigemodus des ersten Teils entsprechend einem Abstand zwischen dem Objekt und dem ersten Teil unterscheidet.

7. Umgebungsüberwachungsvorrichtung (200) nach Anspruch 6, wobei
die Anzeigevorrichtung (D1) so konfiguriert ist, dass sie in einem Fall, bei dem der Abstand zwischen dem Objekt und dem ersten Teil kleiner als ein erster Schwellenwert ist, den ersten Teil in dem Anzeigemodus anzeigt, der sich von dem Anzeigemodus unterscheidet, in dem der zweite Teil angezeigt wird, oder in einem Fall, bei dem der Abstand zwischen dem Objekt und dem ersten Teil größer als der erste Schwellenwert ist, den ersten Teil in dem Anzeigemodus anzeigt, der der gleiche ist wie der Anzeigemodus , in dem der zweite Teil angezeigt wird.

8. Umgebungsüberwachungsvorrichtung (200) nach Anspruch 6, wobei
in einem Fall, bei dem der Abstand zwischen dem Objekt und dem ersten Teil kleiner als ein zweiter Schwellenwert ist, die Anzeigevorrichtung (D1) so konfiguriert ist, dass sie den Anzeigemodus eines Bildschirms, auf dem der erste Teil wiedergegeben wird, von einem Anzeigemodus des Bildschirms ändert, bevor der Abstand zwischen dem Objekt und dem ersten Teil kleiner als der zweite Schwellenwert ist.

9. Umgebungsüberwachungsvorrichtung (200) nach Anspruch 1, wobei
die Anzeigevorrichtung (D1), als Reaktion auf Empfangen einer Eingabe von Informationen einer Konfiguration der Arbeitsmaschine (100), so konfiguriert ist, dass sie zumindest einen Teil der Forminformationen der Arbeitsmaschine (100), die gemäß den Informationen, deren Eingabe empfangen wird, erzeugt werden, anzeigt.

10. Arbeitsmaschine (100), umfassend:
die Umgebungsüberwachungsvorrichtung (200) nach Anspruch 1.

## Revendications

1. Un dispositif de surveillance des alentours (200) pour une machine de travail (100), le dispositif de surveillance des alentours (200) comprenant :
un contrôleur (30) configuré pour effectuer le contrôle des fonctions du dispositif de surveillance des alentours (200) ;
un dispositif de prise de vue (S6) et un dispositif de mesure de distance (S7) configurés pour obtenir un état des alentours de la machine de travail (100) ; **caractérisé en ce que** le dispositif de surveillance des alentours (200) comprend en outre
un dispositif d'affichage (D1) configuré pour afficher une première partie et une deuxième partie de la machine de travail (100) incluses dans des informations de forme de la machine de travail (100) de sorte que la première partie est affichée dans un mode d'affichage différent du mode d'affichage dans lequel la deuxième partie est affichée, la première partie étant plus proche d'un objet que la deuxième partie, et l'objet étant détecté autour de la machine de travail (100) par un détecteur (304).

2. Le dispositif de surveillance des alentours (200) selon la revendication 1, dans lequel
le dispositif d'affichage (D1) est configuré pour afficher une troisième partie et une quatrième partie incluses dans l'objet de sorte que la troisième partie est affichée dans un mode d'affichage différent du mode d'affichage dans lequel la quatrième partie est affichée, la troisième partie étant plus proche de la première partie de la machine de travail (100) que la quatrième partie.

3. Le dispositif de surveillance des alentours (200) selon la revendication 2, dans lequel
le dispositif d'affichage (D1) est configuré pour afficher la première partie incluse dans les informations de forme, en association avec la troisième partie incluse dans l'objet.

4. Le dispositif de surveillance des alentours (200) selon la revendication 1, dans lequel
l'objet détecté par le détecteur (304) comprend un premier objet ayant une hauteur supérieure ou égale à une hauteur prédéterminée, et un deuxième objet ayant une hauteur inférieure à la hauteur prédéterminée, et
le dispositif d'affichage (D1) est configuré pour afficher la première partie plus proche du premier objet que la deuxième partie dans le mode d'affichage différent du mode d'affichage dans lequel la deuxième partie est affichée, ou pour afficher la première partie plus proche du deuxième objet que la deuxième partie dans le mode d'affichage identique au mode d'affichage dans lequel la deuxième partie est affichée.

5. Le dispositif de surveillance des alentours (200) selon la revendication 4, dans lequel
la hauteur prédéterminée correspond à une hauteur d'une partie prédéterminée de la machine de travail (100).

6. Le dispositif de surveillance des alentours (200) selon la revendication 1, dans lequel
le dispositif d'affichage (D1) est configuré pour différencier le mode d'affichage de la première partie en fonction d'une distance entre l'objet et la première partie.

7. Le dispositif de surveillance des alentours (200) selon la revendication 6, dans lequel
le dispositif d'affichage (D1) est configuré pour afficher, dans le cas où la distance entre l'objet et la première partie est inférieure à un premier seuil, la première partie dans le mode d'affichage différent du mode d'affichage dans lequel la deuxième partie est affichée, ou pour afficher, dans le cas où la distance entre l'objet et la première partie est supérieure au premier seuil, la première partie dans le mode d'affichage identique au mode d'affichage dans lequel la deuxième partie est affichée.

8. Le dispositif de surveillance des alentours (200) selon la revendication 6, dans lequel,
dans le cas où la distance entre l'objet et la première partie est inférieure à un deuxième seuil, le dispositif d'affichage (D1) est configuré pour changer le mode d'affichage d'un écran sur lequel la première partie est représentée, à partir d'un mode d'affichage de l'écran avant que la distance entre l'objet et la première partie soit inférieure au deuxième seuil.

9. Le dispositif de surveillance des alentours (200) selon la revendication 1, dans lequel,
en réponse à la réception d'une entrée d'informations relatives à une configuration de la machine de travail (100), le dispositif d'affichage (D1) est configuré pour afficher au moins une partie des informations de forme de la machine de travail (100) générées en fonction des informations dont l'entrée est reçue.

10. Une machine de travail (100), comprenant :
le dispositif de surveillance des alentours (200) selon la revendication 1.
